# EUROPEAN PATENT APPLICATION

(11) **EP 4 258 012 A1**
(43) Date of publication of application: **11.10.2023**
(21) Application number: 21899573.6
(22) Date of filing: 02.07.2021
(51) Int. Cl.: G01S 7/481, G01S 17/02, G01S 17/88

(54) **DETECTION APPARATUS, DETECTION METHOD, AND LASER RADAR**

(30) Priority: 04.12.2020 CN 202011408854
(71) Applicant: Hesai Technology Co., Ltd., Shanghai 201821 (CN)
(72) Inventor: TAO, Jun, Shanghai 201821 (CN); XIANG, Shaoqing, Shanghai 201821 (CN)
(74) Representative: Appelt, Christian W.
(86) International application number: PCT/CN2021/104199
(87) International publication number: WO 2022/116531

(57) **Abstract**

A detection apparatus (10) is provided, including: a receiving lens (11), configured to receive and converge an echo; a detection unit (12), configured to receive the echo and output an electrical signal and including at least one macro-pixel, each macro-pixel including an array composed of a plurality of detectors; a diaphragm array (13), arranged between the receiving lens and the detection unit and located on or near a focal plane, the diaphragm array including at least one sub-diaphragm, each sub-diaphragm including multiple optical switch pixels whose on/off state is independently controllable, each sub-diaphragm enabling one or more of the optical switch pixels to be turned on to form a light-passing area to allow the echo to pass through and irradiate a corresponding macro-pixel; and a processing unit (14), configured to perform calculation and processing according to the electrical signal; and a control unit (15), coupled to the diaphragm array (13) and the processing unit (14), and configured to control each sub-diaphragm in the diaphragm array (13), and control, for at least one sub-diaphragm therein, an on/off state of the optical switch pixels of the sub-diaphragm according to a light spot distribution of the echo on the macro-pixel corresponding to the sub-diaphragm.

## Description

### TECHNICAL FIELD

The present disclosure relates to the field of photoelectric technology, and in particular, to a detection apparatus, a detection method, and a lidar.

### BACKGROUND

At present, the Light Detection and Ranging (LiDAR) technology is widely used in fields of unmanned driving, surveying and mapping, unmanned warehouses, and the like. Due to the high sensitivity, single-photon detection devices have gradually been applied in the lidars in recent years. Single-photon detection device SPADs is a light detection array composed of a plurality of single-photon avalanche diode (SPAD) units. Different from a silicon photomultiplier (SiPM/MPPC, the basic unit of which is also SPAD, the structure mode of which is different from that of the SPADs and independent addressing and reading of which are not allowed), the output of each SPAD unit of the SPADs is digital, and the operation can be realized directly at the back end without analog-to-digital conversion through an ADC or a TDC. In addition, each SPAD unit of the SPADs has the characteristic of addressing and reading, which is a characteristic that the SiPM/MPPC does not have.

At present, as a technical route, the application of the SPADs to the lidars has been applied by more and more manufacturers. For example, the lidar composed of SPADs+VCSEL is used to realize three-dimensional perception capability. The field of unmanned driving needs a lidar with medium-long ranging capability. Different from the single light source operating mode of a FLASH lidar, the lidar with medium-long ranging capability often needs a laser emitting array and a corresponding photoelectric detection array. Each emitter and corresponding one or more photoelectric detection units are referred to as a detection channel, that is, an emitting channel and a receiving channel.

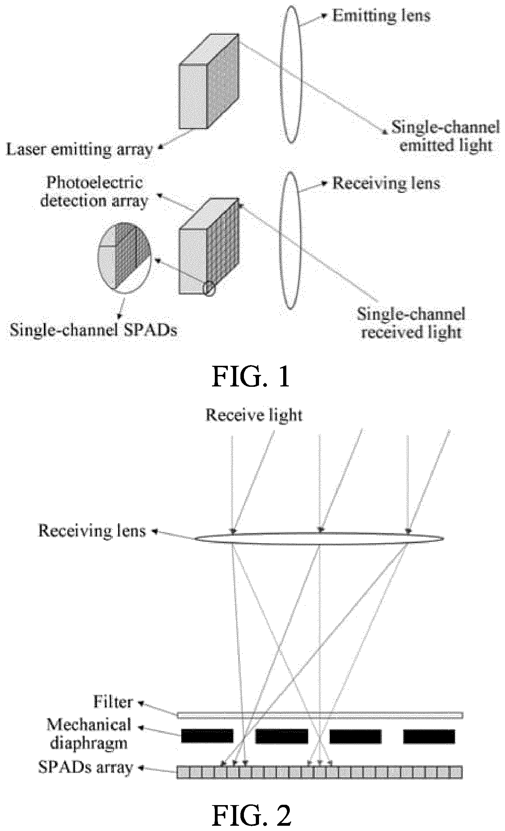

Since one SPAD unit can only provide two outputs: a Geiger avalanche occurs and a Geiger avalanche does not occur. A plurality of SPAD units are used to form SPADs as a single-channel receiving unit, so as to effectively improve the dynamic response range of the channel, such as the single-channel SPADs shown in FIG. 1. An area array detection unit includes a plurality of (multi-channel) SPADs. As a single-photon device, the Geiger avalanche may be triggered by a photon to occur. Therefore, under the condition of strong ambient light, the lidar needs to consider the impact of the suppression of ambient light from the perspective of optical system. It is a common method to suppress ambient light by placing a filter in the optical receiving lens assembly or on the surface of the SPADs. In order to further suppress the ambient light in the field of view and the stray light of the receiving optical system, it is often considered to add a mechanical diaphragm in the optical system. The mechanical diaphragm is an array of small holes corresponding to the detection channel, and has an aperture range of generally several millimeters to dozens of microns. Another solution is to read only outputs of part of the SPAD units of the corresponding channel's SPADs to achieve the effect similar to the diaphragm.

The prior art has the following disadvantages. Although the introduction of the mechanical diaphragm can suppress ambient light well, as shown in FIG. 2 (in which two rays of light represent different incident angles), it has the following defects.

In the paraxial optical system, the position and size of the receiving light spot of the lidar on the focal plane are related to the distance of the measured object. Only when the aperture of the mechanical diaphragm is designed to be large enough can the laser echoes reflected at different distances be received by SPADs. However, a larger aperture leads to a larger field of view of the laser receiving channel, a weaker ability to suppress stray light from the receiving lens, and poorer anti-interference ability of the lidar system to ambient light. Since the mechanical diaphragm is placed near the focal plane of the receiving optical system, the optical path deviation caused by the mechanical deformation of the transmitting and receiving optical systems will lead to the deviation of the position of the receiving light spot on the focal plane, and thus part of the laser echo is to be blocked by the diaphragm and cannot be detected by the SPADs. In the production process, it is necessary to adjust the mechanical diaphragm to a suitable position and angle, which improves the positioning accuracy and difficulty of optical alignment during the production. The mechanical diaphragm cannot dynamically adjust the size of the apertures, and cannot simultaneously achieve an effect of suppressing ambient light, an effect of reducing the receiving field of view, an effect of improving the ranging performance of products, an effect of reducing the difficulty of production process, and an effect of improving the robustness of products to mechanical deformation.

Another method of only reading outputs of some SPAD units of corresponding channel's SPADs may reduce the dynamic response range of the channel SPADs due to the limited number of activated SPAD units when the light spot is relatively small.

The content of the background art is merely the technology known to the inventor, and does not represent the prior art in the art.

### SUMMARY

In order to resolve the above technical problem, an embodiment of the present invention provides a detection apparatus, including:
a receiving lens, configured to receive and converge an echo of a detection laser beam reflected by a target object;
a detection unit, configured to receive the echo and output an electrical signal, the detection unit including at least one macro-pixel, each macro-pixel including an array composed of a plurality of detectors;
a diaphragm array, arranged between the receiving lens and the detection unit and located on or near a focal plane of the receiving lens, the diaphragm array including at least one sub-diaphragm, each sub-diaphragm including a plurality of optical switch pixels whose on/off state is independently controllable, each sub-diaphragm being configured to enable one or more of the optical switch pixels to be turned on to form a light-passing area to allow the echo from the receiving lens to pass through and irradiate a corresponding macro-pixel of the detection unit;
a processing unit, configured to perform calculation and processing according to the electrical signal; and
a control unit, coupled to the diaphragm array and the processing unit, and configured to control each sub-diaphragm in the diaphragm array, and control, for at least one sub-diaphragm therein, an on/off state of the optical switch pixels of the sub-diaphragm according to a light spot distribution of the echo on the macro-pixel corresponding to the sub-diaphragm.

According to an aspect of the present invention, the control unit is configured to control, for the at least one sub-diaphragm, the state of the optical switch pixels of the sub-diaphragm according to the light spot distribution of the echo on the macro-pixel corresponding to the sub-diaphragm, so that the light spot distribution of the echo on the sub-diaphragm is substantially consistent with the light-passing area of the sub-diaphragm.

According to an aspect of the present invention, the processing unit is configured to determine, for the at least one sub-diaphragm, the light spot distribution of the echo on the macro-pixel according to the electrical signal outputted by the macro-pixel corresponding to the sub-diaphragm, the plurality of detectors included in each macro-pixel being independently addressable.

According to an aspect of the present invention, the processing unit is configured to determine, for the at least one sub-diaphragm, a Geiger avalanche number distribution of the detectors in a preset area of the macro-pixel according to the electrical signal outputted by the macro-pixel corresponding to the sub-diaphragm, and determine the light spot distribution of the echo on the macro-pixel according to the Geiger avalanche number distribution.

According to an aspect of the present invention, the preset area is jointly determined according to the light-passing area of the sub-diaphragm corresponding to the macro-pixel, a focal length f of the receiving lens, and a distance d between the detection unit and the diaphragm array.

According to an aspect of the present invention, the control unit is configured to control, for the at least one sub-diaphragm, the state of the optical switch pixels of the sub-diaphragm, so that the Geiger avalanche number distribution of the detectors in the preset area of the macro-pixel corresponding to the sub-diaphragm is substantially consistent with a standard distribution.

According to an aspect of the present invention, the control unit is configured to control, for the at least one sub-diaphragm, the state of the optical switch pixels of the sub-diaphragm according to a deviation between the Geiger avalanche number distribution of the detectors in the preset area of the macro-pixel corresponding to the sub-diaphragm and the standard distribution.

According to an aspect of the present invention, the detector includes a single-photon detector, and the diaphragm array includes a liquid crystal diaphragm or an electric control filter.

According to an aspect of the present invention, the diaphragm array is configured as an attenuator with an adjustable transmittance, and the control unit is configured to initialize the diaphragm array according to a configuration file.

According to an aspect of the present invention, the control unit is configured to: set the diaphragm array as the attenuator when the configuration file is missing, and update the configuration file according to a size, a position, and a shape of a light spot of the echo on the detection unit and a correspondence between the light spot and the diaphragm array.

The present invention further provides a detection method, including:
S401: converging, through a receiving lens, an echo of a detection laser beam reflected by a target object;
S402: providing a light-passing area through a diaphragm array, where the diaphragm array is located on or near a focal plane of the receiving lens, the diaphragm array including at least one sub-diaphragm, each sub-diaphragm including a plurality of optical switch pixels whose on/off state is independently controllable, each sub-diaphragm being configured to enable one or more of the optical switch pixels to be turned on to form a light-passing area to allow the echo from the receiving lens to pass through;
S403: receiving the echo passing through the light-passing area through a detection unit, where the detection unit includes at least one macro-pixel, each macro-pixel including an array composed of a plurality of detectors, the echo passing through the light-passing area of the sub-diaphragm irradiating a corresponding macro-pixel of the detection unit and being converted to an electrical signal;
S404: controlling an on/off state of the optical switch pixels of at least one sub-diaphragm according to a light spot distribution on the macro-pixel corresponding to the sub-diaphragm in the diaphragm array.

According to an aspect of the present invention, step S404 includes: controlling, for the at least one sub-diaphragm, the state of the optical switch pixels of the sub-diaphragm according to the light spot distribution of the echo on the macro-pixel corresponding to the sub-diaphragm, so that the light spot distribution of the echo on the sub-diaphragm is substantially consistent with the light-passing area of the sub-diaphragm.

According to an aspect of the present invention, step S404 includes: determining, for the at least one sub-diaphragm, the light spot distribution of the echo on the macro-pixel according to the electrical signal outputted by the macro-pixel corresponding to the sub-diaphragm, the plurality of detectors included in each macro-pixel being independently addressable.

According to an aspect of the present invention, step S404 further includes: determining, for the at least one sub-diaphragm, a Geiger avalanche number distribution of the detectors in a preset area of the macro-pixel according to the electrical signal outputted by the macro-pixel corresponding to the sub-diaphragm, and determining the light spot distribution of the echo on the macro-pixel according to the Geiger avalanche number distribution.

According to an aspect of the present invention, the preset area is jointly determined according to the light-passing area of the sub-diaphragm corresponding to the macro-pixel, a focal length f of the receiving lens, and a distance d between the detection unit and the diaphragm array.

According to an aspect of the present invention, step S404 includes: controlling, for the at least one sub-diaphragm, the state of the optical switch pixels of the sub-diaphragm, so that the Geiger avalanche number distribution of the detectors in the preset area of the macro-pixel corresponding to the sub-diaphragm is substantially consistent with a standard distribution.

According to an aspect of the present invention, step S404 includes: controlling, for the at least one sub-diaphragm, the state of the optical switch pixels of the sub-diaphragm according to a deviation between the Geiger avalanche number distribution of the detectors in the preset area of the macro-pixel corresponding to the sub-diaphragm and the standard distribution.

According to an aspect of the present invention, the detection method further includes:
initializing the diaphragm array.

According to an aspect of the present invention, the step of initializing the diaphragm array includes: initializing the diaphragm array according to a configuration file; and configuring the diaphragm array as an attenuator with an adjustable transmittance when the configuration file is missing, updating the configuration file according to a size, a position, and a shape of a light spot of the echo on the detection unit and a correspondence between the light spot and the diaphragm array, and then initializing the diaphragm array according to the configuration file.

The present invention further provides a lidar, including:
an emitting unit, including at least one emitter and configured to emit a detection laser beam to detect a target object;
a receiving unit, including the detection apparatus as described above, the detection apparatus being configured to receive an echo of the detection laser beam reflected by the target object and process an echo signal.

According to an aspect of the present invention, one emitter of the emitting unit, one macro-pixel of the receiving unit, and a sub-diaphragm corresponding to the macro-pixel form a detection channel.

According to an aspect of the present invention, the emitter includes a vertical-cavity surface-emitting laser (VCSEL).

In the embodiments of the present invention, the problem of deviation of light spots at different distances under the condition of a paraxial light path is solved, the deviation of received light spot caused by mechanical deformation is solved, and the alignment problem in production can be solved. In addition, the preferred embodiment of the present invention does not change the reading number of SPAD units in each channel, so that the dynamic response of the SPADs in the channel does not change. Moreover, the present invention can solve the saturation problem of the SPADs under strong light.

### BRIEF DESCRIPTION OF THE DRAWINGS

The accompanying drawings are used to provide a further understanding of the present invention, and constitute a part of the specification, are used to explain the present invention in combination with the embodiments of the present invention, and do not constitute a limitation on the present invention. In the accompanying drawings:
FIG. 1 shows a schematic diagram of using a plurality of SPAD units to form a SPAD as a single channel receiving unit.
FIG. 2 shows a schematic diagram of suppressing ambient light using a mechanical diaphragm.
FIG. 3 shows a detection apparatus according to an embodiment of the present invention.
FIG. 4 shows a schematic diagram of a size of a light spot formed by echoes in a same direction on a diaphragm array and a sub-diaphragm when a target object is at different distances.
FIG. 5 shows a correspondence between a light-passing area formed by the diaphragm array and a detector array irradiated through the light-passing area.
FIG. 6A, FIG. 6B, and FIG. 6C show different types of light spots on a diaphragm array.
FIG. 7A and FIG. 7B show superposition effect diagrams of 100 exposures for a 50*50 detector array.
FIG. 8 shows a distribution of excitation times of a detector in a preset area of a corresponding macro-pixel when a light-passing area of the sub-diaphragm matches a light spot on a focal plane.
FIG. 9 shows a distribution of excitation times of a detector in a preset area of a corresponding macro-pixel when a light-passing area of the sub-diaphragm is larger than a size of a light spot on a focal plane.
FIG. 10 shows a distribution of excitation times of a detector in a preset area of a corresponding macro-pixel when a position of the light-passing area of a sub-diaphragm deviates from a light spot on a focal plane.
FIG. 11 shows a distribution of excitation times of a detector in a preset area of a corresponding macro-pixel when a light-passing area of the sub-diaphragm is smaller than a light spot on a focal plane.
FIG. 12 shows a schematic diagram of initializing a sub-diaphragm when a configuration file is missing or an error occurs.
FIG. 13 shows a flowchart of initializing a sub-diaphragm and adjusting a light-passing area of a sub-diaphragm.
FIG. 14 shows a schematic diagram of a lidar according to an embodiment of the present invention.
FIG. 15 shows a detection method according to an embodiment of the present invention.

### DETAILED DESCRIPTION

Only some exemplary embodiments are briefly described below. As those skilled in the art can realize, the described embodiments may be modified in various different ways without departing from the spirit or the scope of the present invention. Therefore, the accompanying drawings and the description are to be considered illustrative in nature but not restrictive.

In the description of the present invention, it should be understood that directions or location relationships indicated by terms such as "center", "longitudinal", "transverse", "length", "width", "thickness", "upper", "lower", "front", "rear", "left", "right", "vertical", "horizontal", "top", "bottom", "inner", "outer", "clockwise", and "counterclockwise" are directions or location relationships shown based on the accompanying drawings, are merely used for the convenience of describing the present invention and simplifying the description, but are not used to indicate or imply that a device or an element should have a particular direction or should be constructed and operated in a particular direction, and therefore cannot be understood as a limitation on the present invention. In addition, terms "first" and "second" are used merely for the purpose of description, and shall not be construed as indicating or implying relative importance or implying a quantity of indicated technical features. Therefore, a feature limited by "first" or "second" may explicitly or implicitly include one or more of the features. In the descriptions of the present invention, unless otherwise explicitly specified, "multiple" means two or more than two.

In the description of the present disclosure, it should be noted that, unless otherwise specified or defined, terms such as "mount", "connected", and "connection" should be understood in a broad sense, for example, the connection may be a fixed connection, a detachable connection, or an integral connection; or the connection may be a mechanical connection, or may be an electrical connection or communication with each other; or the connection may be a direct connection, an indirect connection through an intermediate medium, internal communication between two components, or an interaction relationship between two components. Persons of ordinary skill in the art may understand the specific meanings of the foregoing terms in the present invention according to specific situations.

In the present invention, unless otherwise explicitly stipulated and restricted, that a first feature is "on" or "under" a second feature may include that the first and second features are in direct contact, or may include that the first and second features are not in direct contact but in contact by using other features therebetween. In addition, that the first feature is "on", "above", or "over" the second feature includes that the first feature is right above and on the inclined top of the second feature or merely indicates that a level of the first feature is higher than that of the second feature. That the first feature is "below", "under", or "beneath" the second feature includes that the first feature is right below and at the inclined bottom of the second feature or merely indicates that a level of the first feature is lower than that of the second feature.

Many different implementations or examples are provided in the following disclosure to implement different structures of the present invention. To simplify the disclosure of the present invention, components and settings in particular examples are described below. Certainly, they are merely examples and are not intended to limit the present invention. In addition, in the present invention, reference numerals and/or reference letters may be repeated in different examples. The repetition is for the purposes of simplification and clearness, and a relationship. Moreover, the present invention provides examples of various particular processes and materials, but a person of ordinary skill in the art may be aware of application of another process and/or use of another material.

Preferred embodiments of the present invention are described below with reference to the accompanying drawings. It should be understood that the preferred embodiments described herein are merely used for describing and explaining the present invention but are not intended to limit the present invention.

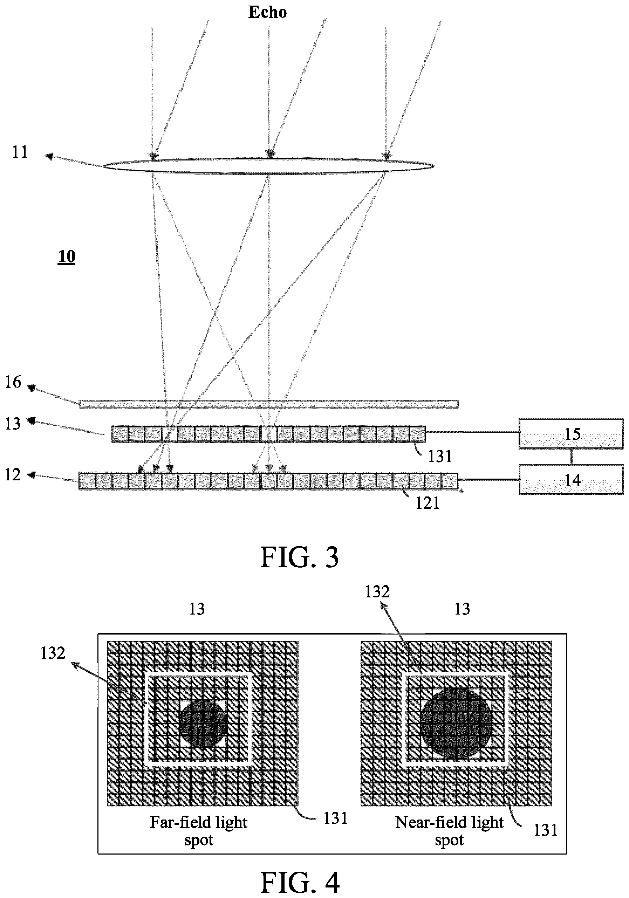

FIG. 3 shows a detection apparatus 10 according to an embodiment of the present invention, which is described in detail with reference to the accompanying drawings. As shown in FIG. 3, the detection apparatus 10 includes a receiving lens 11, a detection unit 12, a diaphragm array 13, a processing unit 14, and a control unit 15, and preferably includes a filter 16. The receiving lens 11 is configured to receive and converge an echo of a detection laser beam reflected by a target object. The receiving lens 11 may generally include a single lens or a lens assembly for focusing the echo onto a focal plane of the receiving lens. The diaphragm array 13 is arranged on or near the focal plane of the receiving lens 11, so that when the echo is parallel light, the echo may be converged to a point or a small area on the diaphragm array 13 through the converging action of the receiving lens 11. The diaphragm array 13 includes a plurality of optical switch pixels 131 (that is, each small square of the diaphragm array 13 in FIG. 3) whose on/off state is independently controllable, as clearly shown in FIG. 4. Each of the optical switch pixels 131 has an "on" state, an "off" state, and a "half-on" state, and can be freely switched among a plurality of states, for example, switched under the control of the control unit 15 described below. When one of the optical switch pixels 131 is switched to the "on" state, the optical switch pixel 131 allows a light beam incident thereon to pass through. When one of the optical switch pixels 131 is switched to the "off' state, the optical switch pixel 131 does not allow a light beam incident thereon to pass through. As shown in FIG. 3, the optical switch pixel 131 identified by shading is in the "off' state, and the two optical switch pixels 131 identified by blank squares are in the "on" state. According to an embodiment of the present invention, the diaphragm array includes a liquid crystal diaphragm or an electric control filter.

The detection unit 12 is arranged on a side of the diaphragm array 13 opposite to the receiving lens 11, that is, the diaphragm array 13 is located between the receiving lens 11 and the detection unit 12. The detection unit 12 is configured to receive the echo passing through the diaphragm array 13 and output an electrical signal. Therefore, through the diaphragm array 13 in FIG. 1, an "optical shutter" is realized. By controlling the on/off state of each of the optical switch pixels 131 in the diaphragm array 13, the echo can pass through and be incident on the detection unit 12 as fully as possible, and the ambient light or background noise can be effectively isolated and prevented from being incident on the detection unit 12. The detection unit 12 may be, for example, an array composed of a plurality of detectors 121. The detectors 121 are preferably single-photon avalanche diodes SPAD, and each of the detectors 121 may individually make response to a photon incident on the detector and output an electrical signal.

Those skilled in the art can easily understand that the array of the detectors 121 in the detection unit 12 and the diaphragm array formed by the optical switch pixels 131 may be one-dimensional arrays or two-dimensional arrays, which are all within the protection scope of the present invention.

The processing unit 14 is electrically connected to or communicates with the detection unit 12, so that the electrical signal outputted by the detection unit 12 can be obtained, and is configured to perform corresponding calculation and processing according to the electrical signal. For example, when used in a lidar, the processing unit 14 may calculate a distance and/or reflectivity of the target object according to the electrical signal.

In the present invention, the detection unit 12 includes at least one macro-pixel, preferably includes a plurality of macro-pixels. Each macro-pixel includes an array composed of a plurality of detectors 121. For example, one SPAD in FIG. 1 is a macro-pixel, which is an array composed of a plurality of SPAD units. Correspondingly, the diaphragm array 13 includes at least one sub-diaphragm, and preferably includes a plurality of sub-diaphragms. Each sub-diaphragm includes a plurality of optical switch pixels whose on/off state is independently controllable. Each optical switch pixel is, for example, a liquid crystal cell whose state is controlled by applying an electric field. Each sub-diaphragm is configured to enable one or more of the optical switch pixels to be turned on to form a light-passing area to allow the echo from the receiving lens to pass through and irradiate a corresponding macro-pixel of the detection unit. Therefore, one sub-diaphragm corresponds to one macro-pixel to form a receiving channel.

Each receiving channel may correspond to an echo incident on the receiving lens 11 in one direction. Still taking the application in the lidar as an example, each macro-pixel needs to ensure that regardless of the distance between the target object and the lidar, as long as the direction of the echo corresponds to the receiving channel, the light spot formed by the echo on the detection unit 12 after being converged by the receiving lens 11 will completely fall within the range of the macro-pixel of the receiving channel.

FIG. 4 shows a schematic diagram of a size of a light spot formed by echoes in a same direction on a diaphragm array 13 and a sub-diaphragm when a target object is at different distances. The left side of FIG. 4 shows that when the target object is farther away, for example, about 100 meters, a light spot area formed on the diaphragm array 13 is smaller. However, when the target object in the same direction (angle) is closer, for example, about 10 meters, a light spot area formed on the diaphragm array 13 is larger. Therefore, during setting of a size of the sub-diaphragm, the sub-diaphragm may be set to be relatively large, so as to ensure that the echoes returning along the angle or direction can fall within the range of the corresponding sub-diaphragm after passing through the receiving lens 11. In FIG. 4, the sub-diaphragm 132 is schematically shown by a box, from which it can be seen that both a far-field light spot and a near-field light spot fall within the range of the sub-diaphragm. During application in the lidar, since each lidar has a theoretical detection range, for example, 5-200 meters, and a closer target object usually leads to a larger light spot. In this case, the size of the sub-diaphragm may be used as the light spot size when the target object is 5 meters away from the lidar, or may be increased appropriately on the basis, for example, increased by 5% or 10%. In addition, the present invention is not limited to the shape of the sub-diaphragm, and the sub-diaphragm may be square as shown in FIG. 4, or may be roughly round, or may be other polygonal shapes, which are all within the protection scope of the present invention. Those skilled in the art can easily understand that when the diaphragm array 13 includes a plurality of sub-diaphragms 132, the sub-diaphragms 132 may be isolated from each other or partially overlapped with each other.

Each sub-diaphragm 132 of the diaphragm array 13 has a one-to-one correspondence with each macro-pixel. When the optical switch pixel of each sub-diaphragm is turned on, the echo from the receiving lens is allowed to pass through and irradiate a corresponding macro-pixel of the detection unit. How to determine the macro-pixel corresponding to each sub-diaphragm is described below.

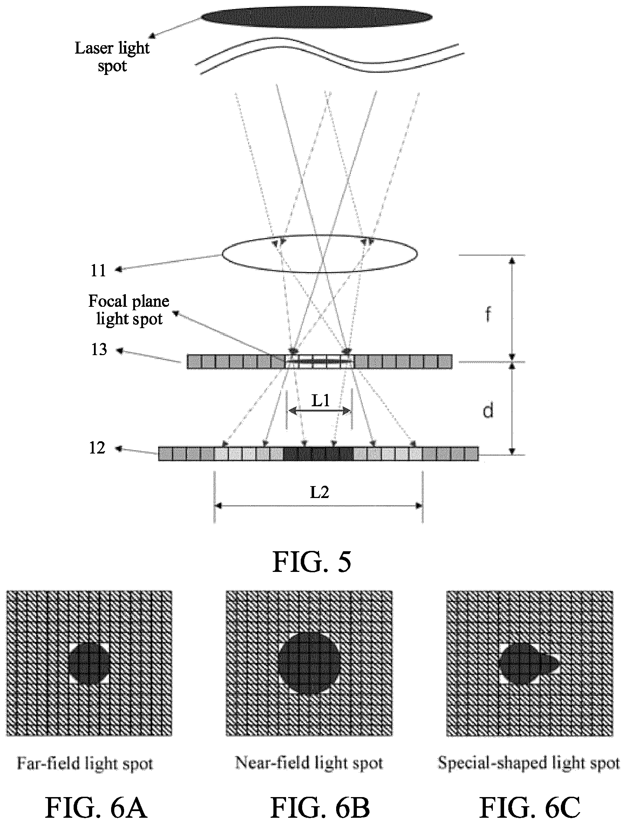

After the optical path of the detection unit 10 is determined, the laser echo is imaged on the focal plane (on the diaphragm array) of the receiving lens. When the light spot on the focal plane matches the light-passing area of the diaphragm array, it can be ensured that all of the echoes are detected and the interference of ambient light is reduced. In this case, a proportional relationship between the light-passing area of the diaphragm array 13 and the irradiated area on the detection unit 12 is determined. As shown in FIG. 5, a single receiving channel is used as an example. A correspondence between a size L1 of the light-passing area formed by the sub-diaphragm in the diaphragm array and a size L2 of the detector array in the macro-pixel irradiated through the light-passing area is shown in FIG. 5. The focal plane is at a focal distance f from the receiving lens 11, and the detector array is placed at a position away from the focal plane D. A photosensitive area L2 on the detector array in the macro-pixel is related to the size of the light spot on the focal plane (that is, the light-passing area size L1 of the sub-diaphragm), a focal length f, a distance d, and an aperture of the receiving lens. Therefore, the position and the size of the macro-pixel corresponding to each sub-diaphragm may be obtained. In FIG. 5, the relationship between the size L1 of the light-passing area of the sub-diaphragm and the size L2 of the detector array in the macro-pixel irradiated through the light-passing area is described in one dimension, which is also applicable to the relationship between the sizes in another dimension, and the details are not described herein again. The sub-diaphragm of one receiving channel and a corresponding macro-pixel thereof are used as an example in the above description. The situations of a plurality of receiving channels are similar, and therefore the details are not described herein again.

The control unit 15 in FIG. 3 is coupled to the diaphragm array 13 and the processing unit 14, and is configured to control each sub-diaphragm in the diaphragm array 13, and control, for at least one sub-diaphragm therein, an on/off state of the optical switch pixels of the sub-diaphragm according to a light spot distribution of the echo on the macro-pixel corresponding to the sub-diaphragm.

As described above, in the actual detection of lidar, the size and the position of the light spot of the echo on the focal plane change with the position of the target object, that is, the light spot on the focal plane does not match the preset light-passing area of the sub-diaphragm. In this case, some echoes are blocked by the sub-diaphragm and cannot be detected through the macro-pixel, or the sub-diaphragm is excessively large relative to the size of the light spot on the focal plane, which brings more ambient light interference. Therefore, according to an embodiment of the present invention, the control unit 15 is configured to control, for the at least one sub-diaphragm, the state of the optical switch pixels of the sub-diaphragm according to the light spot distribution of the echo on the macro-pixel corresponding to the sub-diaphragm, so that the light spot distribution of the echo on the sub-diaphragm is substantially consistent with the light-passing area of the sub-diaphragm, that is, so that the optical switch pixels irradiated by the echo on the sub-diaphragm are turned on to allow the echo to pass through, and the optical switch pixels on the sub-diaphragm which are not irradiated by the echo are turned off to block the ambient light.

FIG. 6A, FIG. 6B, and FIG. 6C show different types of light spots on a diaphragm array. On the diaphragm array 13, the optical switch pixels marked by shading indicate that the optical switch pixels are not irradiated by the echo, and therefore the optical switch pixels are in an off state. The optical switch pixels that are not marked by shading indicate that the optical switch pixels are irradiated by the echo and are controlled to be in the on state, so as to form a light-passing area.

FIG. 6A shows a far-field light spot. The shape of the light spot on the diaphragm array 13 is roughly circular, and a diameter thereof is about a width of four optical switch pixels. In this case, part of the optical switch pixels of the sub-diaphragm of the detection channel is controlled to be turned on, so that the light spot distribution of the echo on the sub-diaphragm is substantially consistent with (that is, matches) the light-passing area of the sub-diaphragm. FIG. 6B shows a situation of a near-field light spot. The shape of the light spot on the diaphragm array 13 is roughly circular, and a diameter thereof is about a width of six optical switch pixels. In this case, the light-passing area of the sub-diaphragm may be opened larger, and the shape remains circular. FIG. 6C shows a situation of a special-shaped light spot. In this case, part of the optical switch pixels of the sub-diaphragm of the detection channel may also be controlled to be turned on, so that the light spot distribution of the echo on the sub-diaphragm is substantially consistent with the light-passing area of the sub-diaphragm.

The concepts of sub-diaphragm and macro-pixel in the context of the present invention are described above. The sub-diaphragm and the macro-pixel are concepts in terms of control and are not necessarily physical entities. The division of the sub-diaphragms and the macro-pixels may be integrated in the control unit 15 and the processing unit 14, and is unnecessarily performed by the detection unit 12.

According to a preferred embodiment of the present invention, the processing unit 14 is configured to determine, for the at least one sub-diaphragm, the light spot distribution of the echo on the macro-pixel according to the electrical signal outputted by the macro-pixel corresponding to the sub-diaphragm, the plurality of detectors included in each macro-pixel being independently addressable. Since the plurality of detectors included in each macro-pixel are independently addressable, the electrical signal outputted by each detector may be learned for subsequent determination of light spot distribution.

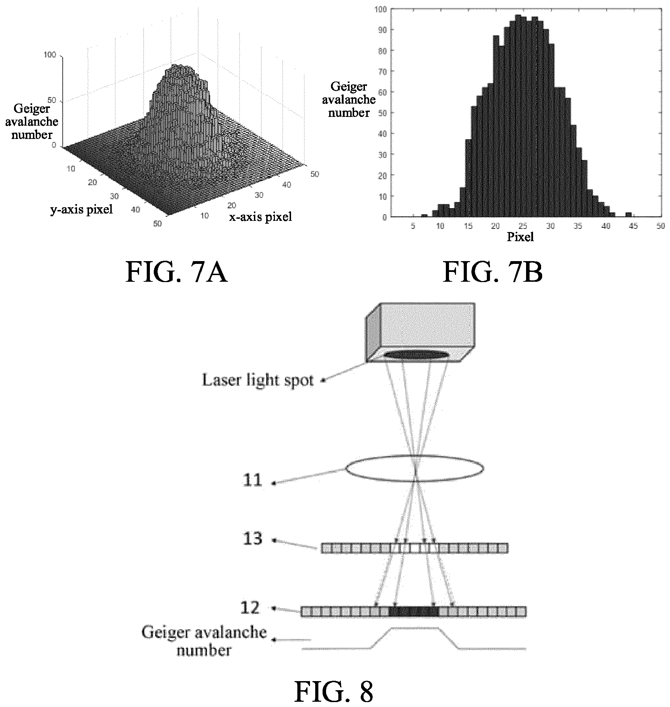

Specifically, for example, for the at least one sub-diaphragm, the processing unit 14 may determine a Geiger avalanche probability or a Geiger avalanche number distribution of the detectors in a preset area of the macro-pixel according to the electrical signal outputted by the macro-pixel corresponding to the sub-diaphragm, and determine the light spot distribution of the echo on the macro-pixel according to the Geiger avalanche probability or the Geiger avalanche number distribution. Based on the current light-passing area size of the sub-diaphragm, according to the above relationship, the preset area is jointly determined by the size of the light-passing area of the sub-diaphragm corresponding to the macro-pixel, the focal length f of the receiving lens, the distance d between the detection unit and the diaphragm array, and the aperture of the receiving lens. Therefore, the corresponding area on the macro-pixel, that is, the preset area, can be obtained conveniently. For a single detector in a preset area, one exposure (for example, for a single-photon detector, corresponding to the Geiger avalanche probability) usually has no obvious significance, and a superposition result (that is, corresponding to the Geiger avalanche number) of a plurality of exposures (a plurality of frames) is used for obtaining the intensity distribution of the light spot on the SPAD. FIG. 7A and FIG. 7B show superposition effect diagrams of 100 exposures for a 50*50 detector array, which are respectively a three-dimensional diagram and a two-dimensional diagram.

When the light-passing area of the sub-diaphragm matches the light spot on the focal plane, the distribution of the excitation number of the detector in the preset area of the corresponding macro-pixel (for example, the result of superposition of a plurality of exposures as shown in FIG. 7) is shown in FIG. 8. A relatively flat part is arranged in a middle part in the corresponding area, and an inclined rising edge and falling edge are arranged on two sides. Slopes of the rising edge and the falling edge are not excessively large, for example, an absolute value is less than a preset threshold. The distribution diagram shown in FIG. 8 may be considered as a standard signal.

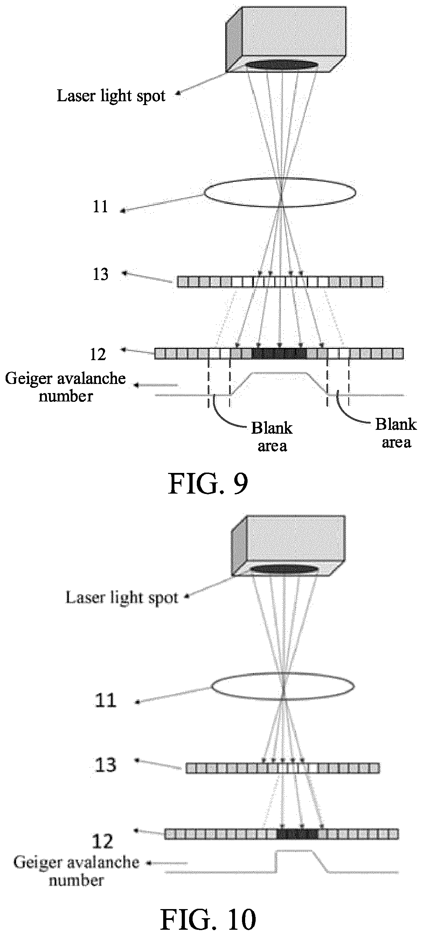

When the light-passing area of the sub-diaphragm is larger than the size of the light spot on the focal plane, as shown in FIG. 9, the Geiger avalanche probability or the Geiger avalanche number of the detectors at the edge of the detector array in the preset area of the macro-pixel corresponding to the sub-diaphragm (the range of the dotted line in the figure corresponds to the preset area) will not increase due to the irradiation of the laser echo, and some blank areas exist. The Geiger avalanche number of the SPADs may be obtained, for example, by accumulating data of each addressable SPAD over a period of time by an accumulator. As shown in FIG. 9, a flat part is arranged in the middle part of the distribution diagram, and an inclined rising and falling edge are arranged on two sides, which are symmetrical, and blank areas are further arranged outside the rising edge and the falling edge.

However, when the position of the light-passing area of the sub-diaphragm deviates from the light spot on the focal plane, the Geiger avalanche number distribution of the detector array in the preset area of the macro-pixel corresponding to the sub-diaphragm will be asymmetric. As shown in FIG. 10, a flat part is arranged in the middle part of the distribution diagram, and the rising edge and the falling edge on two sides of the flat part are not symmetrical.

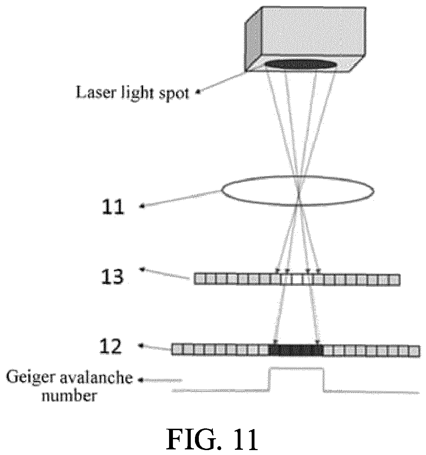

However, when the light-passing area of the sub-diaphragm is smaller than the light spot on the focal plane, the detector at the edge of the detector array in the preset area of the macro-pixel corresponding to the sub-diaphragm has a higher Geiger avalanche probability or a larger number of Geiger avalanches. As shown in FIG. 11, a flat part is arranged in the middle part of the distribution diagram, and slopes of the rising edge and the falling edge on two sides of the flat part are very high, for example, the absolute value is higher than the preset threshold.

Therefore, the processing unit may determine the Geiger avalanche probability or the Geiger avalanche number of the detector in the preset area on the macro-pixel according to the electrical signal outputted by the detector in the macro-pixel, and further determine whether one or more of a size, a position, and a shape of the current light-passing area of the sub-diaphragm are appropriate according to the Geiger avalanche probability or the Geiger avalanche number of the detector.

As described above, the distribution diagram shown in FIG. 8 may be considered as a standard signal. The control unit 15 is configured to control, for the at least one sub-diaphragm, the state of the optical switch pixels of the sub-diaphragm, so that the Geiger avalanche number distribution of the detectors in the preset area of the macro-pixel corresponding to the sub-diaphragm is substantially consistent with a standard distribution.

Specifically, the control unit is configured to control, for the at least one sub-diaphragm, the state of the optical switch pixels of the sub-diaphragm according to a deviation between the Geiger avalanche number distribution of the detectors in the preset area of the macro-pixel corresponding to the sub-diaphragm and the standard distribution. For example, when the distribution diagram of the Geiger avalanche number obtained by the processing unit is the distribution diagram shown in FIG. 9, in this case, the light-passing area of the sub-diaphragm can be reduced to reduce or eliminate the blank area. When the distribution diagram of the Geiger avalanche number obtained by the processing unit is the distribution diagram shown in FIG. 10, in this case, a through-hole area of the sub-diaphragm on a side with a larger slope (the left side in FIG. 10) can be increased. When the distribution diagram of the Geiger avalanche number obtained by the processing unit is the distribution diagram shown in FIG. 11, in this case, the through-hole areas of the sub-diaphragm on two sides can be increased. In addition, in FIG. 8 to FIG. 11, the detection unit 2 and the diaphragm array 13 are shown in a one-dimensional form, and those skilled in the art can easily understand that the above description is also applicable to the detection unit 2 and the diaphragm array 13 in a two-dimensional array.

According to a preferred embodiment of the present invention, the diaphragm array is configured as an attenuator with an adjustable transmittance, and the control unit is configured to initialize the diaphragm array according to a configuration file. Each sub-diaphragm may have a corresponding configuration file, and the sub-diaphragm may be configured according to the configuration file during device startup or initialization or a first detection.

In some cases, a configuration file may be missing or incorrect. In the case of lidar startup, reset, software upgrade, and the like, if the configuration files of the sub-diaphragms of one or more channels are missing or incorrect, the sub-diaphragm of the channel may be configured as a uniform attenuator with an adjustable transmittance. A liquid crystal diaphragm array and an SPAD array are used as examples. The transmittance of liquid crystal may be set to a low value at an initial state, such as T = 10%, and then the avalanche state of the SPAD array of the macro-pixel corresponding to the channel is read. If an effective light spot of an echo may be obtained, the turn-on of the sub-diaphragm of the channel may be configured according to a position, a size, and a shape of the detected light spot of the echo, and the configuration file may be updated.

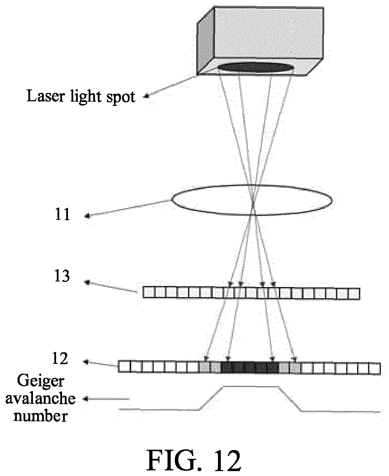

Details are described with reference to FIG. 12. In this case, the diaphragm array 13 or one of the sub-diaphragms is configured as an attenuator. All optical switch pixels can allow light to pass through at a certain attenuation rate and irradiate the detection unit 12. In this case, the Geiger avalanche number of the detectors on the detection unit 12 will present the standard distribution shown in FIG. 8 in a certain area. Further, based on the area, according to the relationship among the size L2 of the irradiated area on the macro-pixel, the size L1 of the light-passing area of the corresponding sub-diaphragm, the focal length f of the receiving lens, and the distance d between the detection unit and the diaphragm array shown in FIG. 5, the required light-passing area of the sub-diaphragm can be conveniently determined.

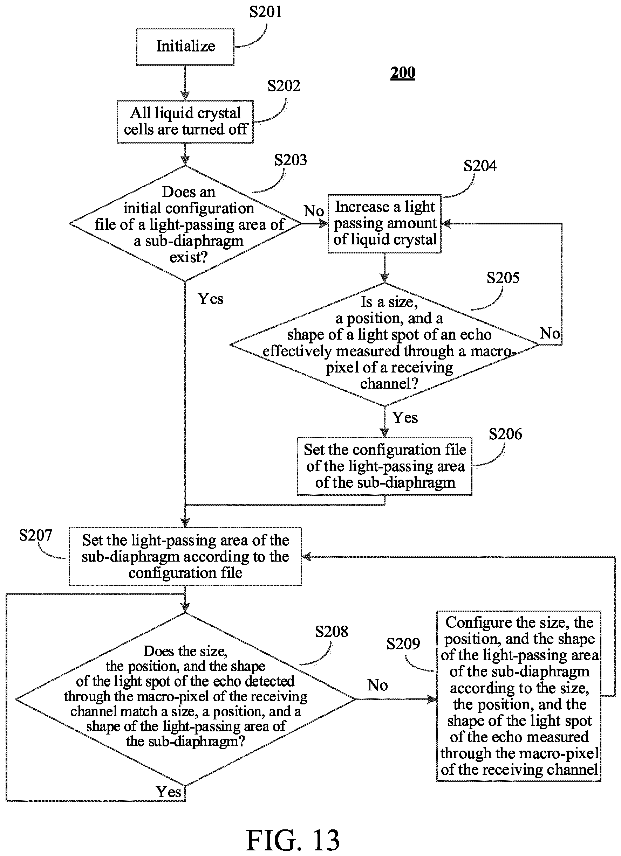

FIG. 13 shows a flowchart of a method 200 for initializing a sub-diaphragm and adjusting a light-passing area of a sub-diaphragm. The detector is an SPAD, and the diaphragm array is a liquid crystal diaphragm array, that is, each optical switch pixel is a liquid crystal cell. Detailed description is given below with reference to the accompanying drawings.

In step S201, a system starts initialization.

In step S202, each liquid crystal cell is turned off.

In step S203, it is checked whether an initial configuration file of the light-passing area of the sub-diaphragm exists. If so, step S207 is performed, or otherwise, step S204 is performed.

In step S204, a light passing amount of the liquid crystal is increased, for example, a liquid crystal diaphragm is set as an attenuator. Preferably, the initial increment is relatively small, such as 10%.

In step S205, it is determined whether a size, a position, and a shape of a light spot of an echo can be effectively measured through an SPAD array of a macro-pixel of the receiving channel. If the size, the position, and the shape of the light spot of the echo can be effectively measured, step S206 is performed. Otherwise, step S204 is performed, and the light passing amount of the liquid crystal continues to be increased until the size, the position, and the shape of the light spot of the echo can be effectively measured in step S205.

In step S206, the size, the position, and the shape of the light-passing area of the corresponding sub-diaphragm are inferred according to the size, the position, and the shape of the light spot of the echo obtained through effective measurement, and the configuration file of the light-passing area of the sub-diaphragm is set accordingly.

In step S207, the light-passing area of the sub-diaphragm is set according to the configuration file.

In step S208, it is determined whether the size, the position, and the shape of the light spot of the echo detected through the SPAD array in the preset area of the macro-pixel of the receiving channel match the size, the position, and the shape of the light-passing area of the sub-diaphragm. If so, step S208 is repeated to continue detection, or otherwise, step S209 is performed.

In step S209, a size, a position, and a shape of a light-passing area of the liquid crystal diaphragm is configured according to the size, the position, and the shape of the light spot of the echo measured through the SPAD array in the preset area of the macro-pixel of the receiving channel.

In the preferred embodiment of the present invention, the mechanical aperture diaphragm is replaced by the liquid crystal diaphragm, and the states of the addressable cell such as on, off, and half-on can be realized by electrically controlling the optical rotation characteristics of the liquid crystal cell. The liquid crystal diaphragm is placed in the focal plane of the receiving lens. Since each liquid crystal cell is addressable and controlled, the light-passing area of the corresponding diaphragm can be dynamically adjusted according to the shape of the light spot on the focal plane in each channel, so as to achieve the optimal receiving field of view constraint and stray light suppression capability. The dynamic response rate of liquid crystal devices ranges from tens of KHz to tens of Hz, which can satisfy the requirements of dynamic diaphragm adjustment of an area array lidar.

When the ambient light is excessively strong, for example, when there is a strong direct light, partial light transmission can be realized by controlling the angle of the liquid crystal to attenuate the ambient light received by the SPAD device. Although the light receiving efficiency of the laser echo is also reduced, the SPAD device may also be prevented from being saturated under strong light and being unable to operate normally. Under the condition of strong background light, it is a reasonable arrangement method to avoid a ranging failure by reducing the ranging ability.

In the embodiments of the present invention, the problem of deviation of light spots at different distances under the condition of a paraxial light path is solved, the deviation of received light spot caused by mechanical deformation is solved, and the alignment problem in production can be solved. In addition, the preferred embodiment of the present invention does not change the reading number of SPAD units in each channel, and the dynamic response range of the channel is not reduced. Moreover, the present invention can solve the saturation problem of the SPAD device under strong light.

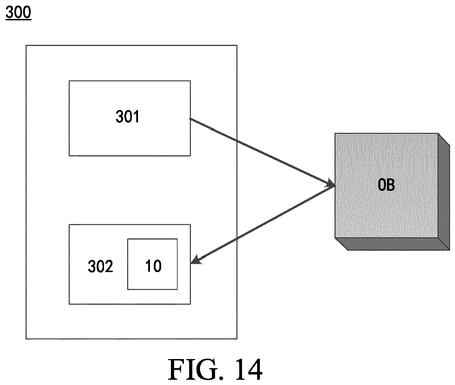

As shown in FIG. 14, the present invention further relates to a lidar 300, which includes an emitting unit 301 and a receiving unit 302. The emitting unit 301 includes at least one emitter and is configured to emit a detection laser beam to detect a target object. The emitter preferably includes a vertical-cavity surface-emitting laser VCSEL. The receiving unit 302 includes the detection apparatus 10 as described above. The detection apparatus is configured to receive an echo of the detection laser beam reflected by the target object and process an echo signal.

According to a preferred embodiment of the present invention, one emitter of the emitting unit, one macro-pixel of the receiving unit, and a sub-diaphragm corresponding to the macro-pixel form a detection channel. A laser array in the emitting unit 301 and the detection unit 12 are, for example, the area array shown in FIG. 1, and for example, the area array composed of VCSELs is also addressable and controllable. In addition, the above emitter may include a light-emitting unit, or may include a plurality of small cells that simultaneously emit light to form a structure of the emitter. A plurality of detection channels of the lidar (for example, which may be controlled in a certain time sequence) to perform detection, and each detection channel adjusts the sub-diaphragm in real time to match according to a reading result of the macro-pixel, so as to suppress the ambient light.

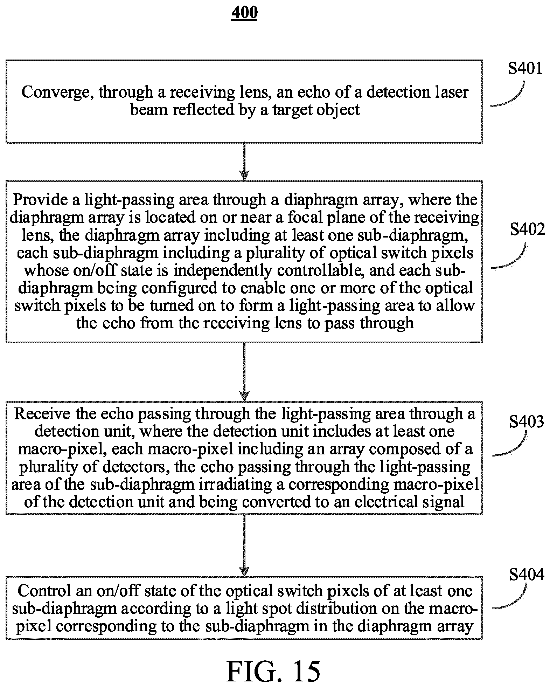

As shown in FIG. 15, the present invention further relates to a detection method 400, which is described in detail with reference to the accompanying drawings.

Step S401: Converge, through a receiving lens, an echo of a detection laser beam reflected by a target object. The receiving lens, such as the receiving lens 11 shown in FIG. 3, includes a single lens or a lens assembly, and is configured to converge an echo.

Step S402: Provide a light-passing area through a diaphragm array, where the diaphragm array is located on or near a focal plane of the receiving lens, the diaphragm array including at least one sub-diaphragm, each sub-diaphragm including a plurality of optical switch pixels whose on/off state is independently controllable, each sub-diaphragm being configured to enable one or more of the optical switch pixels to be turned on to form a light-passing area to allow the echo from the receiving lens to pass through. The diaphragm array is, for example, the diaphragm array 13 shown in FIG. 3, which is arranged on or near the focal plane of the receiving lens 11 and includes one or more sub-diaphragms.

Step S403: Receive the echo passing through the light-passing area through a detection unit, where the detection unit includes at least one macro-pixel, each macro-pixel includes an array composed of a plurality of detectors, the echo passing through the light-passing area of the sub-diaphragm irradiates a corresponding macro-pixel of the detection unit and is converted to an electrical signal. The detection unit is, for example, the detection unit 12 shown in FIG. 3.

Step S404: Control an on/off state of the optical switch pixels of at least one sub-diaphragm according to a light spot distribution on the macro-pixel corresponding to the sub-diaphragm in the diaphragm array.

According to a preferred embodiment of the present invention, in step S104, for the at least one sub-diaphragm, the state of the optical switch pixels of the sub-diaphragm is controlled according to the light spot distribution of the echo on the macro-pixel corresponding to the sub-diaphragm, so that the light spot distribution of the echo on the sub-diaphragm is substantially consistent with the light-passing area of the sub-diaphragm, for example, the effects achieved in FIG. 6A, FIG. 6B, and FIG. 6C.

According to a preferred embodiment of the present invention, in step S104, for the at least one sub-diaphragm, the light spot distribution of the echo on the macro-pixel is determined according to the electrical signal outputted by the macro-pixel corresponding to the sub-diaphragm, the plurality of detectors included in each macro-pixel being independently addressable.

According to a preferred embodiment of the present invention, step S104 further includes: determining, for the at least one sub-diaphragm, a Geiger avalanche number distribution of the detectors in a preset area of the macro-pixel according to the electrical signal outputted by the macro-pixel corresponding to the sub-diaphragm, and determining the light spot distribution of the echo on the macro-pixel according to the Geiger avalanche number distribution.

According to a preferred embodiment of the present invention, in step S104, for the at least one sub-diaphragm, the state of the optical switch pixels of the sub-diaphragm is controlled, so that the Geiger avalanche number distribution of the detectors in the preset area of the macro-pixel corresponding to the sub-diaphragm is substantially consistent with a standard distribution. The standard distribution is as shown in FIG. 8.

According to a preferred embodiment of the present invention, in step S 104, for the at least one sub-diaphragm, the state of the optical switch pixels of the sub-diaphragm is controlled according to a deviation between the Geiger avalanche number distribution of the detectors in the preset area of the macro-pixel corresponding to the sub-diaphragm and the standard distribution, so that the Geiger avalanche number distribution of the detector is as consistent as possible or consistent with the standard distribution.

According to a preferred embodiment of the present invention, the detection method 400 further includes initializing the diaphragm array. For example, the diaphragm array may be initialized according to a configuration file. When the configuration file is missing, the diaphragm array is configured as an attenuator with an adjustable transmittance, the configuration file is updated according to a size, a position, and a shape of a light spot of the echo on the detection unit and a correspondence between the light spot and the diaphragm array, and then the diaphragm array is initialized according to the configuration file. The initialization may be performed by using the flow shown in FIG. 13.

Finally, it should be noted that: the foregoing descriptions are merely preferred embodiments of the present invention, but are not intended to limit the present invention. Although the present invention has been described in detail with reference to the foregoing embodiments, a person skilled in the art may make modifications to the technical solutions described in the foregoing embodiments, or make equivalent replacements to some technical features in the technical solutions. Any modification, equivalent replacement, or improvement made and the like within the spirit and principle of the present invention shall fall within the protection scope of the present invention.

## Claims

1. A detection apparatus, comprising:
a receiving lens, configured to receive and converge an echo of a detection laser beam reflected by a target object;
a detection unit, configured to receive the echo and output an electrical signal, the detection unit comprising at least one macro-pixel, each macro-pixel comprising an array composed of a plurality of detectors;
a diaphragm array, arranged between the receiving lens and the detection unit and located on or near a focal plane of the receiving lens, the diaphragm array comprising at least one sub-diaphragm, each sub-diaphragm comprising a plurality of optical switch pixels whose on/off state is independently controllable, each sub-diaphragm being configured to enable one or more of the optical switch pixels to be turned on to form a light-passing area to allow the echo from the receiving lens to pass through and irradiate a corresponding macro-pixel of the detection unit;
a processing unit, configured to perform calculation and processing according to the electrical signal; and
a control unit, coupled to the diaphragm array and the processing unit, and configured to control each sub-diaphragm in the diaphragm array, and control, for at least one sub-diaphragm therein, an on/off state of the optical switch pixels of the sub-diaphragm according to a light spot distribution of the echo on the macro-pixel corresponding to the sub-diaphragm.

2. The detection apparatus according to claim 1, wherein the control unit is configured to control, for the at least one sub-diaphragm, the state of the optical switch pixels of the sub-diaphragm according to the light spot distribution of the echo on the macro-pixel corresponding to the sub-diaphragm, so that the light spot distribution of the echo on the sub-diaphragm is substantially consistent with the light-passing area of the sub-diaphragm.

3. The detection apparatus according to claim 2, wherein the processing unit is configured to determine, for the at least one sub-diaphragm, the light spot distribution of the echo on the macro-pixel according to the electrical signal outputted by the macro-pixel corresponding to the sub-diaphragm, the plurality of detectors comprised in each macro-pixel being independently addressable.

4. The detection apparatus according to claim 3, wherein the processing unit is configured to determine, for the at least one sub-diaphragm, a Geiger avalanche number distribution of the detectors in a preset area of the macro-pixel according to the electrical signal outputted by the macro-pixel corresponding to the sub-diaphragm, and determine the light spot distribution of the echo on the macro-pixel according to the Geiger avalanche number distribution.

5. The detection apparatus according to claim 4, wherein the preset area is jointly determined according to the light-passing area of the sub-diaphragm corresponding to the macro-pixel, a focal length f of the receiving lens, and a distance d between the detection unit and the diaphragm array.

6. The detection apparatus according to claim 5, wherein the control unit is configured to control, for the at least one sub-diaphragm, the state of the optical switch pixels of the sub-diaphragm, so that the Geiger avalanche number distribution of the detectors in the preset area of the macro-pixel corresponding to the sub-diaphragm is substantially consistent with a standard distribution.

7. The detection apparatus according to claim 5, wherein the control unit is configured to control, for the at least one sub-diaphragm, the state of the optical switch pixels of the sub-diaphragm according to a deviation between the Geiger avalanche number distribution of the detectors in the preset area of the macro-pixel corresponding to the sub-diaphragm and the standard distribution.

8. The detection apparatus according to any of claims 1 to 7, wherein the detector comprises a single-photon detector, and the diaphragm array comprises a liquid crystal diaphragm or an electric control filter.

9. The detection apparatus according to any of claims 1 to 7, wherein the diaphragm array is configured as an attenuator with an adjustable transmittance, and the control unit is configured to initialize the diaphragm array according to a configuration file.

10. The detection apparatus according to claim 9, wherein the control unit is configured to set the diaphragm array as the attenuator when the configuration file is missing, and update the configuration file according to a size, a position, and a shape of a light spot of the echo on the detection unit and a correspondence between the light spot and the diaphragm array.

11. A detection method, comprising:
S401: converging, through a receiving lens, an echo of a detection laser beam reflected by a target object;
S402: providing a light-passing area through a diaphragm array, wherein the diaphragm array is located on or near a focal plane of the receiving lens, the diaphragm array comprising at least one sub-diaphragm, each sub-diaphragm comprising a plurality of optical switch pixels whose on/off state is independently controllable, each sub-diaphragm being configured to enable one or more of the optical switch pixels to be turned on to form a light-passing area to allow the echo from the receiving lens to pass through;
S403: receiving the echo passing through the light-passing area through a detection unit, wherein the detection unit comprises at least one macro-pixel, each macro-pixel comprising an array composed of a plurality of detectors, the echo passing through the light-passing area of the sub-diaphragm irradiating a corresponding macro-pixel of the detection unit and being converted to an electrical signal;
S404: controlling an on/off state of the optical switch pixels of at least one sub-diaphragm according to a light spot distribution on the macro-pixel corresponding to the sub-diaphragm in the diaphragm array.

12. The detection method according to claim 11, wherein step S404 comprises: controlling, for the at least one sub-diaphragm, the state of the optical switch pixels of the sub-diaphragm according to the light spot distribution of the echo on the macro-pixel corresponding to the sub-diaphragm, so that the light spot distribution of the echo on the sub-diaphragm is substantially consistent with the light-passing area of the sub-diaphragm.

13. The detection method according to claim 12, wherein step S404 comprises: determining, for the at least one sub-diaphragm, the light spot distribution of the echo on the macro-pixel according to the electrical signal outputted by the macro-pixel corresponding to the sub-diaphragm, the plurality of detectors comprised in each macro-pixel being independently addressable.

14. The detection method according to claim 13, wherein step S404 further comprises: determining, for the at least one sub-diaphragm, a Geiger avalanche number distribution of the detectors in a preset area of the macro-pixel according to the electrical signal outputted by the macro-pixel corresponding to the sub-diaphragm, and determining the light spot distribution of the echo on the macro-pixel according to the Geiger avalanche number distribution.

15. The detection method according to claim 14, wherein the preset area is jointly determined according to the light-passing area of the sub-diaphragm corresponding to the macro-pixel, a focal length f of the receiving lens, and a distance d between the detection unit and the diaphragm array.

16. The detection method according to claim 15, wherein step S404 comprises: controlling, for the at least one sub-diaphragm, the state of the optical switch pixels of the sub-diaphragm, so that the Geiger avalanche number distribution of the detectors in the preset area of the macro-pixel corresponding to the sub-diaphragm is substantially consistent with a standard distribution.

17. The detection method according to claim 15, wherein step S404 comprises: controlling, for the at least one sub-diaphragm, the state of the optical switch pixels of the sub-diaphragm according to a deviation between the Geiger avalanche number distribution of the detectors in the preset area of the macro-pixel corresponding to the sub-diaphragm and the standard distribution.

18. The detection method according to any of claims 11 to 17, further comprising:
initializing the diaphragm array.

19. The detection method according to claim 18, wherein the step of initializing the diaphragm array comprises: initializing the diaphragm array according to a configuration file; and configuring the diaphragm array as an attenuator with an adjustable transmittance when the configuration file is missing, updating the configuration file according to a size, a position, and a shape of a light spot of the echo on the detection unit and a correspondence between the light spot and the diaphragm array, and then initializing the diaphragm array according to the configuration file.

20. A lidar, comprising:
an emitting unit, comprising at least one emitter and configured to emit a detection laser beam to detect a target object;
a receiving unit, comprising the detection apparatus according to any of claims 1 to 10, the detection apparatus being configured to receive an echo of the detection laser beam reflected by the target object and process an echo signal.

21. The lidar according to claim 20, wherein one emitter of the emitting unit, one macro-pixel of the receiving unit, and a sub-diaphragm corresponding to the macro-pixel form a detection channel.

22. The lidar according to claim 20 or 21, wherein the emitter comprises a vertical-cavity surface-emitting laser (VCSEL).
